# EUROPEAN PATENT SPECIFICATION

(11) **EP 1 703 581 B1**
(45) Date of publication and mention of the grant of the patent: **13.10.2010**
(21) Application number: 06110358.6
(22) Date of filing: 23.02.2006
(51) Int. Cl.: H01M 8/24, H01M 8/06

(54) **Fuel Cell Stack and System**
Brennstoffzellenstapel und Brennstoffzellensystem
Empilement de piles à combustible et système de pile à combustible

(30) Priority: 16.03.2005 KR 2005021973
(43) Date of publication of application: 20.09.2006
(73) Proprietor: Samsung SDI Co., Ltd., Gyeonggi-do (KR)
(72) Inventor: KIM, Ju-Yong, Legal & IP Team,, Giheung-gu, Yongin-si Gyeonggi-do (KR); AN, Seong-Jin, Legal & IP Team,, Giheung-gu, Yongin-si Gyeonggi-do (KR); KWEON, Ho-Jin, Legal & IP Team,, Giheung-gu, Yongin-si Gyeonggi-do (KR)
(74) Representative: Walaski, Jan Filip

(56) References cited:
- EP-A- 1 172 876
- WO-A-02/19452
- US-A- 4 933 242

## Description

The present invention relates to a fuel cell system and more particularly to a stack of a fuel cell system.

As is well known, a fuel cell is an electricity generating system for generating electric energy through an electrochemical reaction between oxygen and hydrogen contained in hydrocarbon materials such as methanol, ethanol, natural gas, etc.

A polymer electrolyte membrane fuel cell (hereinafter, referred to as PEMFC) has been recently developed and has an excellent output characteristic, a low operating temperature, and fast starting and response characteristics. Because of this, the PEMFC has a wide range of application, including mobile power sources for vehicles, distributed power sources for homes or buildings, and small-sized power sources for electronic apparatuses.

A fuel cell system employing the PEMFC scheme basically requires a stack, a reformer, a fuel tank, and a fuel pump. The stack constitutes an electricity generator set having a plurality of unit cells, and the fuel pump supplies fuel of the fuel tank to the reformer. Then, the reformer, which is connected to the stack, reforms the fuel to generate hydrogen and supplies hydrogen to the stack.

The fuel pump supplies the fuel of the fuel tank to the reformer and the reformer reforms the fuel to generate hydrogen. The generated hydrogen is supplied to the stack, and air is supplied to the stack by another pump. Then, the stack generates electric energy through an electrochemical reaction between the hydrogen and oxygen in the air.

Conventionally, since the stack and the reformer are provided separately and are systemically coupled to each other, the structure is complex and the provision area is great, thereby making the system manufacturing and size reduction difficult.

From the viewpoint of thermal efficiency, in a conventional fuel cell system, since a reformer and a stack are provided and operated at different places, that is, since the reformer and the stack are provided separately and the stack is supplied with the hydrogen gas generated from the reformer to generate electric energy, the heat generated from the respective parts cannot be efficiently used, thereby making it difficult to enhance the thermal efficiency of the entire system.

US 4,933,242 discloses a fuel cell stack including a reforming plate disposed between separator plates of fuel cell elements.

EP-A-1 172 876 discloses a fuel cell including an internal reformation unit.

WO02/194 discloses a fuel processor with integrated fuel cell including a fuel reformer.

According to the invention, there is provided a stack for a fuel cell system according to claim 1.

An embodiment of the present invention provides a stack of a fuel cell system that can minimize the volume of the fuel cell system and enhance the thermal efficiency of the fuel cell system having the stack.

One embodiment of the present invention provides a stack of a fuel cell system. The stack includes: an electricity generator for generating electric energy through a reaction between hydrogen and oxygen; and a fuel processing unit for generating hydrogen from a fuel and supplying the generated hydrogen to the electricity generator, wherein the electricity generator and the fuel processing unit are integrally coupled in a body.

An operating temperature of the electricity generator may range from 100°C to 250°C.

The electricity generator may include a plurality of electricity generators, and the fuel processing unit may be disposed between the electricity generators.

One embodiment of the present invention provides a stack of a fuel cell system. The stack includes: at least one electricity generator including a membrane-electrode assembly and first and second separators, the first and second separators having hydrogen and oxygen transfer channels and respectively contacting first and second sides of the membrane-electrode assembly; and a reforming reactor on a surface of at least one of the first and second separators facing away from the hydrogen and oxygen transfer channels. In this embodiment, the reforming reactor generates hydrogen from a fuel and supplies the generated hydrogen to the electricity generator.

The electricity generator may include a plurality of electricity generators. In this case, a hydrogen transfer channel of the hydrogen and oxygen transfer channels may be on a contact surface of the first separator contacting the first side of the membrane-electrode assembly, and an oxygen transfer channel of the hydrogen and oxygen transfer channels may be on a contact surface of the second separator contacting the second side of the membrane-electrode assembly.

The reforming reactor is disposed between one of the electricity generators and a neighboring one of the electricity generators, and may be formed in first and second reformer channels on surfaces of the first and second separators facing away from the hydrogen and oxygen transfer channels; and the first and second reformer channels may be combined to form a reaction channel.

The reaction channel may include a plurality of the reaction channels formed in the first and second separators from a first edge of the first and second separators to a second edge thereof facing away from the first edge.

An oxidation catalyst and a reforming catalyst is alternately or continuously formed on inner surfaces of each of the reaction channels.

An oxidation catalyst may be formed on an inner surface of one of the reaction channels, and a reforming catalyst may formed on an inner surface of another one of the reaction channels neighboring the one of the reaction channels.

The reforming reactor may include a vaporization channel between the reaction channels.

The reaction channel may include an inlet and an outlet pierced into each of the first and second separators and a channel section connecting the inlet and the outlet.

The reaction channel may be formed in a serpentine shape.

An oxidation catalyst and a reforming catalyst may be alternately and continuously formed on an inner surface of the reaction channel.

An oxidation catalyst may be formed on an inner surface of the reaction channel close to the inlet, and a reforming catalyst may be formed in the inner surface of the reaction channel close to the outlet.

The reaction channel may include a plurality of parallel channels, and an oxidation catalyst and a reforming catalyst may be alternately and continuously formed on an inner surface of each of the plurality of parallel channels of the reaction channel.

One embodiment of the present invention provides a stack of a fuel cell system. The stack includes: at least one electricity generator including a membrane-electrode assembly and first and second separators, the first and second separators having hydrogen and oxygen transfer channels and respectively contacting first and second sides of the membrane-electrode assembly; and a reforming reactor connected to the first and second separators. In this embodiment, the reforming reactor generates hydrogen from a fuel and supplies the generated hydrogen to the electricity generator.

The electricity generator may include a plurality of electricity generators. In this case, a hydrogen transfer channel of the hydrogen and oxygen transfer channels may be on a contact surface of the first separator contacting the first side of the membrane-electrode assembly, and an oxygen transfer channel of the hydrogen and oxygen transfer channels may be on a contact surface of the second separator contacting the second side of the membrane-electrode assembly.

The reforming reactor may include at least one reaction plate disposed between one of the electricity generators and a neighboring one of the electricity generators.

The reforming reactor may include a plurality of reaction channels, and the plurality of reaction channels pierce through the reaction plate from a first edge of the reaction plate to a second edge of the reaction plate facing away from the first edge.

An oxidation catalyst and a reforming catalyst may be alternately and continuously formed on an inner surface of each of the reaction channels.

An oxidation catalyst may be formed on an inner surface of one of the reaction channels and a reforming catalyst may be formed on an inner surface of another one of the reaction channels neighboring the one of the reaction channels.

The reaction plate may include a vaporization channel formed between the reaction channels.

The reforming reactor may include: a first reaction plate having a plurality of first reaction channels formed in the first reaction plate from a first edge of the first reaction plate to a second edge of the first reaction plate facing away from the first edge of the first reaction plate; a second reaction plate disposed on a first side surface of the first reaction plate and having a plurality of second reaction channels formed in the second reaction plate from a first edge of the second reaction plate to a second edge of the second reaction plate facing away from the first edge of the second reaction plate; and a third reaction plate disposed on a second side surface of the first reaction plate and having a plurality of third reaction channels formed in the second reaction plate from a first edge of the third reaction plate to a second edge of the third reaction plate facing away from the first edge of the third reaction plate.

An oxidation catalyst may be formed on inner surfaces of the first reaction channels, and a reforming catalyst may be formed on inner surfaces of the second and third reaction channels.

A vaporization channel may be formed between the second and third reaction channels.

One embodiment of the present invention provides a fuel cell system. The fuel cell system includes: a stack including at least one electricity generator for generating electric energy through a reaction between hydrogen and oxygen and a fuel processing unit integrally coupled to the electricity generator, wherein the fuel processing unit generates hydrogen from a fuel and supplies the generated hydrogen to the electricity generator; a fuel supply unit for supplying the fuel to the fuel processing unit; and an oxygen supply unit for supplying oxygen to the electricity generator and the fuel processing unit.

The fuel may be in a liquid form.

The fuel may be a mixture of methanol and water.

An operating temperature of the electricity generator may range from 100°C to 250°C.

The electricity generator may include a plurality of electricity generators. In this case, the fuel processing unit may be disposed between the electricity generators.

The fuel supply unit may include at least one fuel tank storing the fuel and a fuel pump which is connected to the fuel tank and which supplies the fuel.

The oxygen supply unit may include at least one air pump.

One embodiment of the present invention provides a fuel cell system. The fuel cell includes: a stack for generating hydrogen from a fuel and for generating electric energy through a reaction between hydrogen and oxygen; a fuel supply unit for supplying the fuel to the stack; and an oxygen supply unit for supplying oxygen to the stack. In this embodiment, the stack includes: at least one electricity generator including a membrane-electrode assembly and first and second separators, the first and second separators having hydrogen and oxygen transfer channels and respectively contacting first and second sides of the membrane-electrode assembly; and a reforming reactor on a surface of at least one of the first and second separators facing away from the hydrogen and oxygen transfer channels, wherein the reforming reactor generates hydrogen from a fuel and supplies the generated hydrogen to the electricity generator.

The electricity generator may include a plurality of electricity generators. In this case, a hydrogen transfer channel of the hydrogen and oxygen transfer channels is on a contact surface of the first separator contacting the first side of the membrane-electrode assembly, and an oxygen transfer channel of the hydrogen and oxygen transfer channels is on a contact surface of the second separator contacting the second side of the membrane-electrode assembly.

The reforming reactor may be disposed between one of the electricity generators and a neighboring one of the electricity generators and is formed in first and second reformer channels on surfaces of the first and second separators facing away from the hydrogen and oxygen transfer channels. Here, the first and second reformer channels may be combined to form a reaction channel, and the fuel may be supplied to the reaction channel to generate hydrogen from the fuel, and the generated hydrogen is supplied to the plurality of electricity generators.

One embodiment provides a fuel cell system. The fuel cell includes: a stack for generating hydrogen from a fuel and generating electric energy through a reaction between hydrogen and oxygen; a fuel supply unit for supplying the fuel to the stack; and an oxygen supply unit for supplying oxygen to the stack. In this embodiment, the stack includes at least one electricity generator including a membrane-electrode assembly and first and second separators, the first and second separators having hydrogen and oxygen transfer channels and respectively contacting first and second sides of the membrane-electrode assembly; and a reforming reactor connected to the first and second separators, wherein the reforming reactor generates hydrogen from a fuel and supplies the generated hydrogen to the electricity generator.

The electricity generator may include a plurality of the electricity generators. In this case, a hydrogen transfer channel of the hydrogen and oxygen transfer channels may be on a contact surface of the first separator contacting the first side of the membrane-electrode assembly, and an oxygen transfer channel of the hydrogen and oxygen transfer channels may be on a contact surface of the second separator contacting the second side of the membrane-electrode assembly.

The reforming reactor may include at least one reaction plate disposed between one of the electricity generators and a neighboring one of the electricity generators.

The reaction plate may have a plurality of reaction channels pierced from a first edge of the reaction plate to a second edge of the reaction plate facing away from the first edge, and the fuel may be supplied to the reaction channels to generate hydrogen from the fuel, and the generated hydrogen may be supplied to the plurality of electricity generators.

The accompanying drawings, together with the specification, illustrate exemplary embodiments of the present invention, and, together with the description, serve to explain the principles of the invention.
Fig. 1 is a block diagram schematically illustrating a construction of a fuel cell system according to an embodiment of the present invention;
Fig. 2 is an exploded perspective view illustrating a stack of a fuel cell system according to a first embodiment of the present invention;
Fig. 3 is a coupled perspective view of the stack shown in Fig. 2;
Fig. 4 is a front view schematically illustrating a structure of a reforming reactor shown in Fig. 2;
Figs. 5A, 5B, 5C, 5D, and 5E are front views schematically illustrating separators in modified examples of the reforming reactor according to the first embodiment of the present invention;
Fig. 6 is an exploded perspective view illustrating a structure of a stack according to a second embodiment of the present invention;
Fig. 7 is a cross-sectional view of a reaction plate in a reforming reactor shown in Fig. 6;
Figs. 8A and 8B are cross-sectional views schematically illustrating modified examples of the reforming reactor according to the second embodiment of the present invention;
Fig. 9 is a cross-sectional view illustrating a structure of a stack of a fuel cell system according to a third embodiment of the present invention; and
Fig. 10 is a cross-sectional view illustrating a structure of a stack of a fuel cell system according to a fourth embodiment of the present invention.

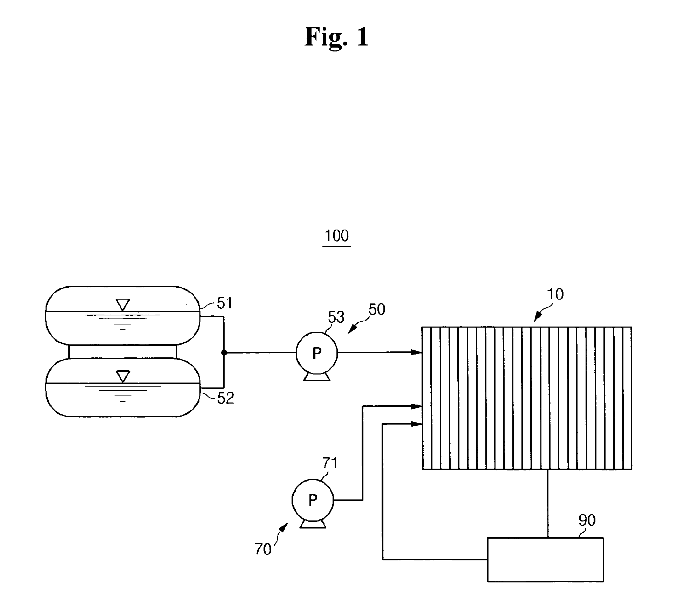

Fig. 1 is a block diagram schematically illustrating a construction of a fuel cell system according to an embodiment of the present invention.

Referring to Fig. 1, the fuel cell system 100 has a polymer electrolyte membrane fuel cell (PEMFC) scheme, which reforms fuel to generate hydrogen and allows hydrogen and oxidant to electrochemically react with each other to generate electric energy.

The fuel used for generating electricity in the fuel cell system 100 may include liquid or gas fuel containing hydrogen, such as methanol, ethanol, and natural gas, etc. However, the liquid fuel is used in the following description for exemplary purposes and the invention is not thereby limited.

The fuel cell system 100 may utilize pure oxygen stored in an additional storage device as the oxidant for reacting with hydrogen or may utilize air containing oxygen as the oxidant. However, the latter is used in the following description for exemplary purposes and the invention is not thereby limited.

The fuel cell system 100 includes a stack 10 for generating hydrogen from fuel and generating electric energy through a reaction between hydrogen and oxygen, a fuel supply unit 50 for supplying the fuel to the stack 10, and an oxygen supply unit 70 for supplying oxygen to the stack 10.

The stack 10 has a structure in which an electricity generation unit generates electric energy by operation of a fuel cell and a fuel processing unit for generating hydrogen from the fuel. The fuel cell and the fuel processing unit are integrally coupled in a body and have a combined function of carrying out a reforming of the fuel and an electrochemical reaction between hydrogen and oxygen. The specific construction thereof will be described in more detail below.

The fuel supply unit 50 supplies the fuel and a mixture of the fuel and water (hereinafter, referred to as a fuel mixture) to the fuel processing unit of the stack 10. The fuel supply unit 50 includes a first fuel tank 51 for storing the fuel, a second fuel tank 52 for storing the fuel mixture, and a fuel pump 53, which is connected to the first and second fuel tanks 51 and 52 and supplies the fuel and the fuel mixture from the first and second fuel tanks 51 and 52 to the fuel processing unit of the stack 10.

The oxygen supply unit 70 supplies oxygen to the electricity generation unit and the fuel processing unit of the stack 10. The oxygen supply unit 70 includes an air pump 71 for pumping in air and supplying the air to the stack 10.

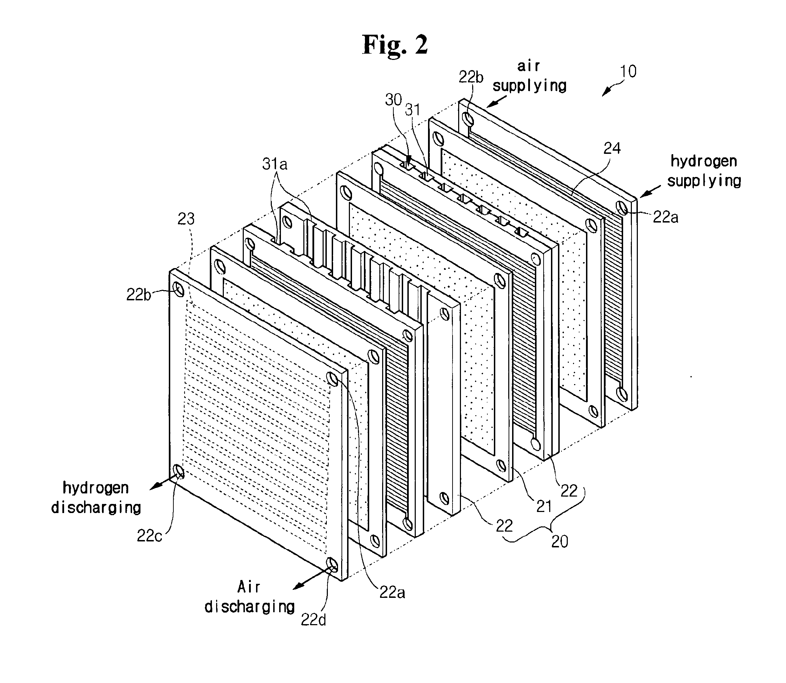

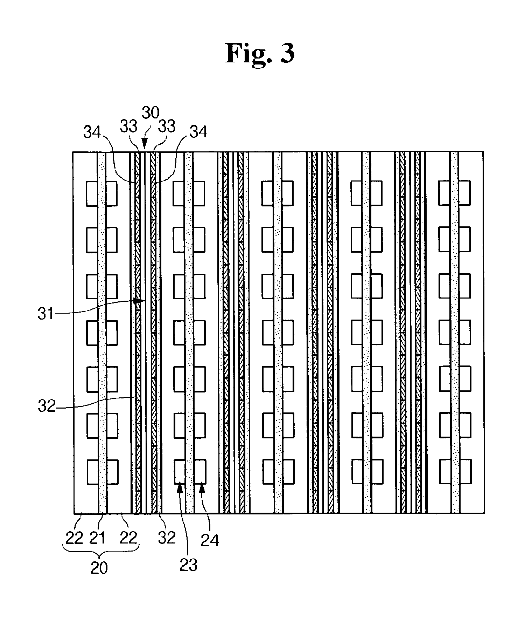

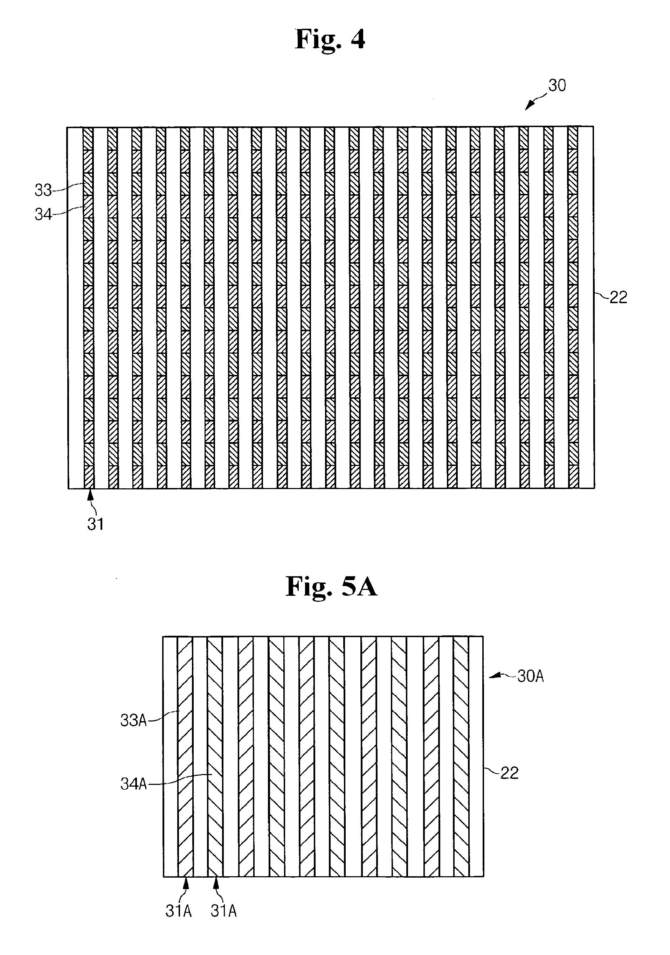

Fig. 2 is an exploded perspective view illustrating a stack of a fuel cell system according to a first embodiment of the present invention, Fig. 3 is a coupled perspective view of the stack shown in Fig. 2, and Fig. 4 is a front view schematically illustrating a structure of a reforming reactor shown in Fig. 2.

Referring to the Figs. 2, 3, and 4, the stack 10 includes a plurality of electricity generators 20 for generating electric energy through an electrochemical reaction of hydrogen and oxygen. Each electricity generator 20 constitutes a unit cell of the fuel cell. The unit cell of the fuel cells supplied with reforming gas from a reforming reactor 30, to be described below, is supplied with air from the oxygen supply unit 70, and generates electric energy through the electrochemical reaction of hydrogen in the reforming gas and oxygen in the air.

Accordingly, in the present embodiment, by successively stacking a plurality of electricity generators 20, the stack 10 can be formed by the plurality of electricity generators 20.

The electricity generators 20 are constructed to have a high operating temperature that can be used for generating electric power for vehicles or houses. In one embodiment, the electricity generators 20 can be constructed to have an operating temperature range from about 120°C to 200°C to reduce the concentration of carbon monoxide in the reforming gas supplied from the reforming reactor 30.

Specifically, each electricity generator 20 can be constructed by closely disposing separators (also referred to as "bipolar plate" in the art) on both surfaces of a membrane-electrode assembly (hereinafter, referred to as MEA) 21.

The MEA 21 has a predetermined active area where the electrochemical reaction of hydrogen and oxygen occurs and includes an anode electrode formed on one side surface, a cathode electrode on the other side surface, and an electrolyte membrane formed between both electrodes. The anode electrode converts hydrogen in the hydrogen gas supplied from the reforming reactor 30 into hydrogen ions (protons) and electrons through an oxidation reaction of hydrogen. The cathode electrode generates heat of a predetermined temperature and moisture through a reduction reaction of oxygen in the air supplied from the oxygen supply unit 70, and the hydrogen ions move to the cathode electrode from the anode electrode. The electrolyte membrane performs an ion exchange function for moving the hydrogen ions generated from the anode electrode to the cathode electrode.

The anode electrode is made of a catalyst material having resistance to carbon monoxide poisoning. That is, the anode electrode is made of a catalyst material which can reduce the concentration of carbon monoxide contained in the reforming gas by the use of a catalytic activation at the operating temperature of the electricity generators 20 described above.

The separators 22 closely disposed on either side of the MEA 21 function as a conductor for connecting the anode electrode and the cathode electrode of the MEA 21 in series to each other and also as a passage for supplying the hydrogen gas and the air required for the oxidation and reduction reactions of the MEA 21 to the anode electrode and the cathode electrode.

In the present embodiment, a surface of a first separator 22 opposite to a surface of the first separator 22 contacting a corresponding first MEA 21 should be opposing a surface of a second separator 22 opposite to a surface of the second separator 22 contacting the MEA 21 of the neighboring electricity generator 20.

A hydrogen transfer channel 23 for supplying hydrogen to the anode electrode of the MEA 21 and an oxygen transfer channel 24 for supplying air to the cathode electrode of the MEA 21 are formed in each separator 22. The hydrogen transfer channel 23 is connected to the reforming reactor and the oxygen transfer channel 24 is connected to the air pump 71 of the oxygen supply unit 70.

Each separator 22 is provided with manifold-type first and second inlets 22a and 22b for supplying hydrogen gas and air to the hydrogen transfer channel 23 and the oxygen transfer channel 24 and manifold-type first and second outlets 22c and 22d for discharging the remaining hydrogen gas and air that did not chemically react in the MEA 21 while passing through the channels 23 and 24.

The first inlet 22a does not communicate with the oxygen transfer channel 24 and communicates with the hydrogen channel 23. The second inlet 22b does not communicate with the hydrogen channel 23 and communicates with the oxygen transfer channel 24. The first outlet 22c does not communicate with the oxygen transfer channel 24 and communicates with the hydrogen transfer channel 23. The second outlet 22d does not communicate with the hydrogen transfer channel 23 and communicates with the oxygen transfer channel 24. The first and second inlets 22a and 22b are formed in the upper portion of each separator 22, and the first and second outlets 22c and 22d are formed in the lower portion of each separator 22.

The reforming reactor 30 according to the present invention is provided in the stack 10 having the above-mentioned structure. The reforming reactor 30 is disposed between plural electricity generators 20 and generates reformed gas from the fuel mixture and supplies the reformed gas to the electricity generators 20.

In the present invention, the reforming reactor 30 preheats the whole stack 10 at 200°C through an oxidation reaction of the fuel and the air and generates hydrogen from the fuel mixture through an auto-thermal reaction (ATR) of the fuel mixture and the air and a steam reforming (SR) reaction of the fuel mixture using the thermal energy.

Specifically, the reforming reactor 30 is disposed between the neighboring electricity generators 20 and includes a reaction channel 31 which simultaneously performs the oxidation reaction, the auto-thermal reaction, and the steam reforming reaction while allowing the pure fuel and the air or the fuel mixture and the air to pass therethrough. The reaction channel 31 can be composed of channels 31a formed on the contact surfaces of the separators 22 closely contacting the neighboring electricity generators 20, respectively. Here, the channels 31a can be formed on the surface of the first separator 22 opposite to the surface of the first separator 22 contacting the corresponding first MEA 21 of one electricity generator 20 and on the contact surface of the second separator 22 of the neighboring electricity generator 20 contacting the first separator 22.

Therefore, by integrally coupling the channels 31 a in a state where the separator 22 of one electricity generator 20 and the separator 22 of another electricity generator 20 neighboring the one electricity generator 20 are opposing each other, the reaction channel 31 according to the present embodiment can be formed. The reaction channel 31 is pierced from one edge of the separator 22 to the other edge of the separator 22. The pure fuel and the air and the mixture fuel and the air are injected into the one edge of the reaction channel 31; and the hydrogen gas, the non-reacted fuel, and water (generated through the oxidation reaction, the auto-thermal reaction, and the steam reforming reaction) are discharged out from the other edge.

The reaction channel 31 is both connected to the first fuel tank 51 and the air pump 71 and connected to the second fuel tank 52 and the air pump 71. In the stack 10 according to the present embodiment having the above-mentioned connection structure, it is exemplarily shown that the fuel and the air and the fuel mixture and the air are supplied from one edge of the reaction channel 31, and the non-reacted fuel, water, and hydrogen gas are discharged from the other edge of the reaction channel 31. In one embodiment, any suitable structures for supplying the fuel, the fuel mixture, and the air to one edge, and for discharging the hydrogen gas, the non-reacted fuel, and the water from the other edge, known to those skilled in the art can be used.

In the reaction channel 31 according to the present embodiment, a film-shaped carrier 32 made of alumina is formed on the inner surface of the channels 31a. An oxidation catalyst 33 and a reforming catalyst 34 which are acquired by carrying catalyst materials in the carrier 32 are alternately formed in a longitudinal direction of the channels 31a (as is shown in Fig. 4).

The carrier 32 functions as an insulating layer for preventing a current generated from the electricity generators 20 from being leaked through the liquid fuel (fuel mixture), and also functions as a carrier for carrying the catalyst materials.

The oxidation catalyst 33 is composed of an oxidation catalyst material which promotes the oxidation of the fuel and the air and generates the thermal energy having a predetermined temperature range. The reforming catalyst 34 is composed of a reforming catalyst material which promotes the steam reforming reaction of the fuel mixture and generates hydrogen from the fuel mixture.

Referring now also to Fig. 1, the fuel cell system 100 according to the present embodiment also includes a recovery member 90 which recovers the hydrogen, the non-reacted fuel, and the water discharged through the reaction channel 31 of the reforming reactor 30 by the use of heat exchange, and supplies the recovered hydrogen to the electricity generators 20.

Examples of the recovery member 90 can include a condenser and a vapor-liquid separator having a suitable structure known to these skilled in the art. The recovery member 90 is connected to the first inlets 22a of the separators 22 through a pipe line to supply the recovered hydrogen gas to the electricity generators 20.

Operations of the fuel cell system according to an embodiment of the present invention having the above-mentioned structure will be described in more detail below.

First, at the time of starting up the fuel cell system 100, the fuel pump 53 supplies the pure fuel stored in the first fuel tank 51 to the reaction channel 31 of the reforming reactor 30. At the same time, the air pump 71 supplies air to the reaction channel 31. Then, the fuel and the air are subjected to the oxidation reaction with the oxidation catalyst 33 while passing through the reaction channel 31.

As such, the reforming reactor 30 according to the present embodiment generates the thermal energy having a predetermined temperature range with reaction of the fuel and the air through the oxidation reaction. Since the stack 10 according to the present embodiment includes the reforming reactor 30 between the neighboring electricity generators 20, the thermal energy is delivered to the respective electricity generators 20. Accordingly, the entire stack 10 is preheated at the temperature from 120°C to 200°C which is the specific operating temperature range of the stack 10.

In this preheated state, the fuel pump 53 supplies the fuel mixture stored in the second fuel tank 52 to the reaction channel 31 of the reforming reactor 30. At the same time, the air pump 71 supplies the air to the reaction channel 31.

Then, the fuel mixture is vaporized with the thermal energy while passing through the reaction channel 31. In the process, a part of the fuel contained in the vaporized fuel mixture and the air are subjected to the auto-thermal reaction (ATR) with the oxidation catalyst 33.

In view of the foregoing, with the reaction of the fuel and the air in the auto-thermal reaction, the reforming reactor 30 of the present embodiment generates the thermal energy corresponding to the operating temperature of the stack 10 and also the thermal energy necessary for the steam reforming (SR) reaction which will be described below in more detail.

Also, in the fuel cell system 100, the amount of air supplied to the reaction channel 31 of the reforming reactor 30 can be adjusted by an air valve (not shown).

In the fuel cell system 100, since the amount of air supplied to the reaction channel 31 can be varied in accordance with the degree of closing and opening of the air valve, it is possible to control the temperature range of the thermal energy by selectively adjusting the amount of air.

In addition, the reforming reactor 30 according to the present embodiment generates hydrogen through the steam reforming reaction of the vaporized fuel mixture using the reforming catalyst 34. Since the steam reforming reaction of the fuel mixture using the reforming catalyst 34 is an endothermic reaction, the reforming reactor 30 can be supplied with the thermal energy necessary for the reforming reaction through the auto-thermal reaction of the fuel and the air.

In this embodiment, the fuel cell system 100 can also control the temperature range of the thermal energy by selectively adjusting the concentration of the fuel mixture supplied to the reaction channel 31 or the amount of the reforming catalyst 34.

Thereafter, the hydrogen gas is discharged through an end of the reaction channel 31 along with the non-reacted fuel and the water.

The hydrogen gas, the non-reacted fuel, and the water are separated from each other by the recovery member 90. The recovered hydrogen gas is then supplied to the first inlet 22a of the separators 22 through a pipe line.

At the same time, the air pump 71 supplies the air to the second inlet 22b of the separator 22. Then, the hydrogen gas is supplied to the anode electrode of the MEA 21 through the hydrogen transfer channel of the separator 22, and the air is supplied to the cathode electrode of the MEA 21 through the oxygen transfer channel 24 of the separator 22.

The anode electrode decomposes the hydrogen gas into electrons and protons (hydrogen ions) through the oxidation reaction of hydrogen. The protons are transferred to the cathode electrode through an electrolyte membrane of the MEA 21, and the electrons are transferred to the cathode electrode of the neighboring MEA 21 through the separator 22 or an additional terminal (not shown), and not through the electrolyte membrane. At this time, the flow of electrons generates a current of the fuel cell system 100.

The cathode electrode also generates heat of a predetermined temperature and moisture through a reaction of the hydrogen ions transferred to the cathode electrode through the electrolyte membrane and the oxygen contained in the air.

In this way, the fuel cell system 100 according to the present invention can output the electric energy of a predetermined amount to a predetermined load (for example, a laptop computer) by repeating the processes described above.

However, in the fuel cell system 100 according to the present invention, in order to keep the stack 10 within a proper operating temperature range (from about 120°C to 200°C), it is necessary to continuously cool the heat generated from the electricity generators 20.

In the present embodiment, the reforming reactor 30 is provided between the neighboring electricity generators 20. Accordingly, the heat is delivered to the reforming reactor 30 through the electricity generator 20 and is used as the thermal energy necessary for the steam reforming reaction of the fuel mixture along with the thermal energy generated through the auto-thermal reaction of the fuel and the air.

As such, the heat generated from the electricity generators 20 can be cooled through the steam reforming reaction of the fuel mixture. In addition, the supply of the thermal energy necessary for the steam reforming reaction depends not only upon the auto-thermal reaction of the fuel and the air, but also on the heat generated from the electricity generators 20.

Also, in the fuel cell system 100 according to the present invention, the reformed gas generated from the reforming reactor 30 includes a very small amount of carbon monoxide as a byproduct. However, since the electricity generators 20 are operating under a high temperature operating condition that ranges from 120°C to 200°C, and the anode electrode of the MEA 21 is made of a catalyst material having a resistance to carbon monoxide poisoning, the concentration of carbon monoxide and the effect of the carbon monoxide can be reduced with the activation of the catalyst material.

Figs. 5A to 5E are front views schematically illustrating separators in modified examples of the reforming reactor according to the first embodiment of the present invention.

Referring to Fig. 5A, in a first modified example of the reforming reactor 30A according to the present embodiment, a plurality of reaction channels 31A are pierced from one edge of the separator 22 to the other edge of the separator 22. An oxidation catalyst 33A is formed on the inner surface of one reaction channel 31A, and a reforming catalyst 34A is formed on the inner surface of the neighboring reaction channel 31A. In this way, the oxidation catalyst 33A and the reforming catalyst 34A are alternately formed in the reaction channels 31A.

Therefore, in the first modified example, when the pure fuel and the air are supplied to one reaction channel 31A, the thermal energy of a predetermined temperature range is generated through the oxidation reaction of the fuel and the air with the oxidation catalyst 33A.

The thermal energy is delivered to the reforming catalyst 34A of the neighboring reaction channel 31A. When the fuel mixture is supplied to the neighboring reaction channel 31A, the fuel mixture absorbs the thermal energy and is vaporized, thereby generating hydrogen through the steam reforming reaction of the fuel mixture with the reforming catalyst 34A.

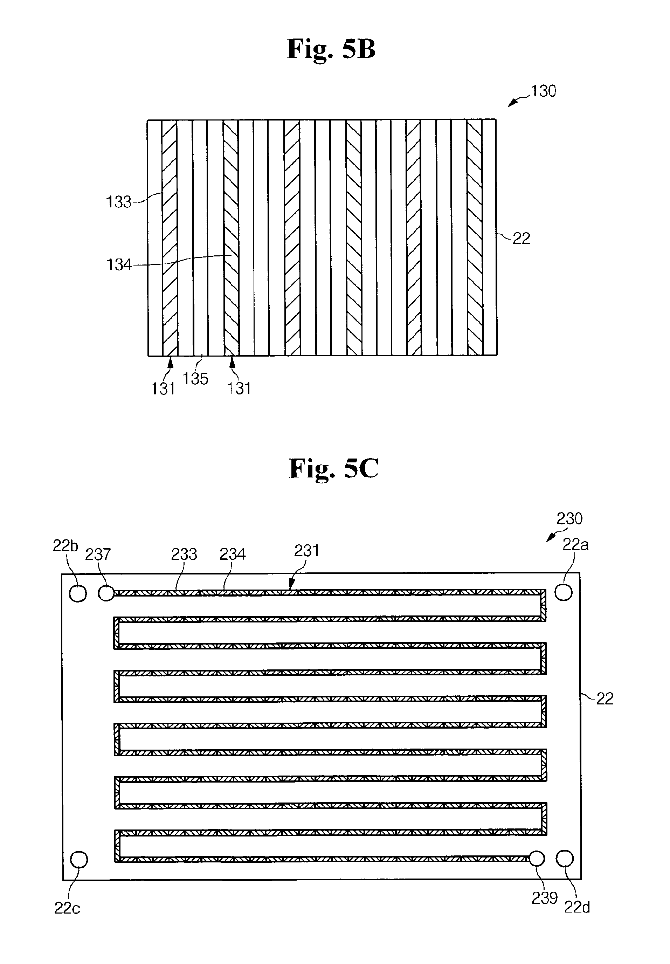

Referring to Fig. 5B, a second modified example of the reforming reactor 130 according to the present embodiment has substantially the same structure as the first modified example, except that a vaporization channel 135 is formed between the reaction channels 131.

That is, the reforming reactor 130 can be constructed such that the vaporization channel 135 is disposed between the reaction channel 131 in which the oxidation catalyst 133 is formed and the reaction channel 131 in which the reforming catalyst 134 is formed.

Here, the vaporization channel 135 is supplied with the thermal energy generated through the oxidation reaction of the fuel and the air with the oxidation catalyst 133 to vaporize the fuel mixture and supplies the vaporized fuel mixture to the reaction channel 131 in which the reforming catalyst 134 is formed.

Therefore, according to the second modified example, when the pure fuel and the air are supplied to the reaction channels 131 in which the oxidation catalyst 133 is formed, the thermal energy of a predetermined temperature range is generated through the oxidation reaction of the fuel and the air with the oxidation catalyst 133.

The thermal energy is delivered to the vaporization channel 135 according to the present modified example. When the fuel mixture is supplied to the vaporization channel 135, the fuel mixture is vaporized with the thermal energy while passing through the vaporization channel 135.

The vaporized fuel mixture is supplied to the reaction channel 131 in which the reforming catalyst 134 is formed. The reforming reactor 130 according to the present second modified example generates the hydrogen gas through the steam reforming reaction of the fuel mixture with the reforming catalyst 134.

Referring to Fig. 5C, in a third modified example of the reforming reactor 230 according to the present embodiment, a plurality of linear paths is formed at intervals on the contact surfaces of the separators 22 of the neighboring electricity generators (not shown) and both ends of the linear paths are alternately connected, thereby constituting, as a whole, a reaction channel 231 having a serpentine shape. The reaction channel 231 is shaped to connect an inlet 237 and an outlet 239 pierced through each separator 22. The oxidation catalyst 233 and the reforming catalyst 234 are alternately formed on the inner surface of the reaction channel 231 in the extending direction of the reaction channel 231.

In Fig. 5C, reference numerals 22a and 22b denote manifold-type first and second inlets for injecting the hydrogen gas and the air to the hydrogen transfer channel (not shown) and the oxygen transfer channel (not shown) of each separator 22, respectively. Reference numerals 22c and 22b denote manifold type first and second outlets for discharging the hydrogen gas and the air that did not participate in the reaction in the channels.

Therefore, in the present third modified example, when the pure fuel and the air are supplied to the reaction channel 231 through the inlet 237 at the time of starting up the fuel cell system, the thermal energy is generated through the oxidation reaction of the fuel and the air with the oxidation catalyst 233, and the entire system can be preheated with the thermal energy.

In this state, when the fuel mixture and the air are supplied to the reaction channel 231, the fuel mixture is vaporized with the thermal energy, the thermal energy is generated through the auto-thermal reaction (ATR) of a part of the fuel and the air with the oxidation catalyst 233, and the hydrogen gas is generated through the steam reforming reaction of the vaporized fuel mixture with the reforming catalyst 234. The generated hydrogen gas is then discharged through the outlet 239 and is supplied to the first inlet 22a of the separator 22.

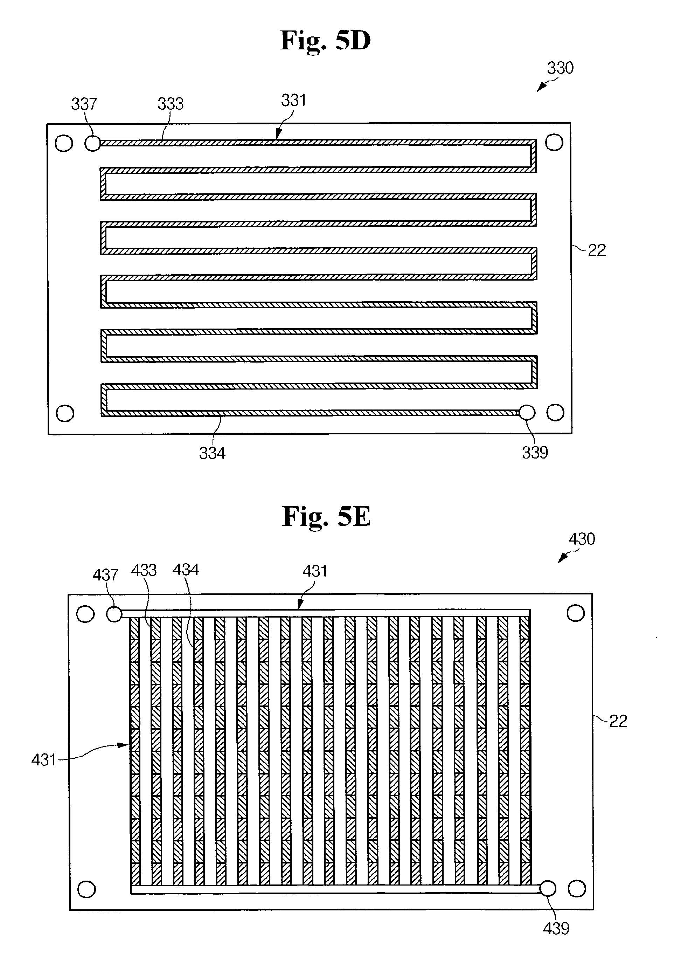

Referring to Fig. 5D, in a fourth modified example of the reforming reactor 330 according to the present embodiment, the inlet 337 and the outlet 339 are connected through the reaction channel 331 in a manner that is substantially the same as the above-mentioned third modified example. The oxidation catalyst 333 is formed on the inner surface of the reaction channel 331 from the center of the reaction channel 331 to the inlet 337 and the reforming catalyst 334 is formed on the inner surface of the reaction channel 331 from the center thereof to the outlet 339.

According to the present fourth modified example, when the fuel mixture and the air are injected into the inlet 337, the thermal energy of a predetermined temperature range is generated through the oxidation reaction of a part of the fuel contained in the fuel mixture and the air with the oxidation catalyst 333.

Accordingly, the fuel mixture is vaporized with the thermal energy. The reforming reactor 330 according to the present fourth modified example then generates hydrogen gas through the steam reforming reaction of the vaporized fuel mixture with the reforming catalyst 334.

Referring to Fig. 5E, in a fifth modified example of the reforming reactor according to the present embodiment, a plurality of parallel reaction channels 431 are formed to be connected between the inlet 437 and the outlet 439, and the oxidation catalyst 433 and the reforming catalyst 434 are alternately formed between the inner surfaces of the reaction channels 431.

According to the present fifth modified example, when the pure fuel and the air are supplied to the reaction channels 431 through the inlet 437 at the time of starting up the fuel cell system, the thermal energy is generated through the oxidation reaction of the fuel and the air with the oxidation catalyst 433, and the entire stack can be preheated with the thermal energy.

In this state, when the fuel mixture and the air are supplied to the reaction channels 431, the fuel mixture is vaporized with the thermal energy. The thermal energy is generated through the auto-thermal reaction (ATR) of a part of the fuel and the air with the oxidation catalyst 433, and the hydrogen gas is generated through the steam reforming reaction of the vaporized fuel mixture with the reforming catalyst 434.

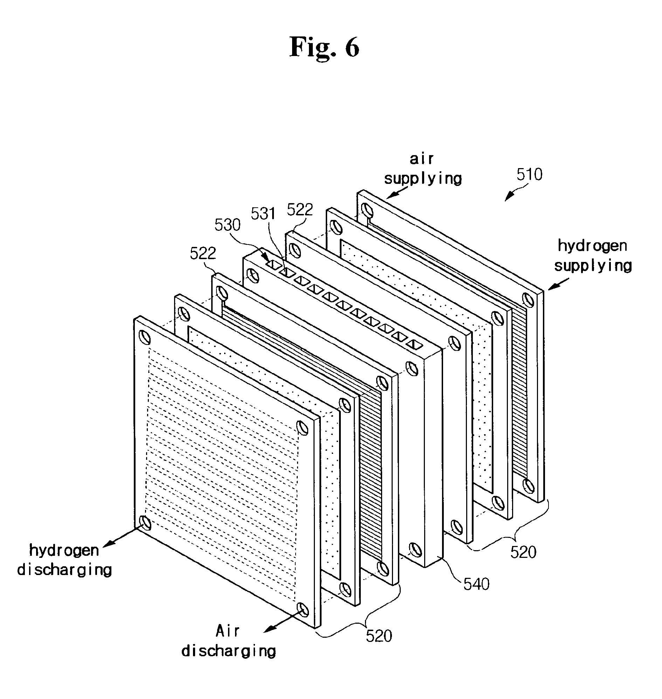

Fig. 6 is an exploded perspective view illustrating a structure of a stack according to a second embodiment of the present invention.

Referring to the Fig. 6, in the stack 510 for a fuel cell system according to the present embodiment, a reaction plate 540 is disposed between the separators 522 of the neighboring electricity generators 520 and multiple reaction channels 531 are formed in the reaction plate 540, thereby forming the reforming reactor 530. Here, the reaction channels 531 can be pierced in the reaction plate 540 from one edge to the opposite edge.

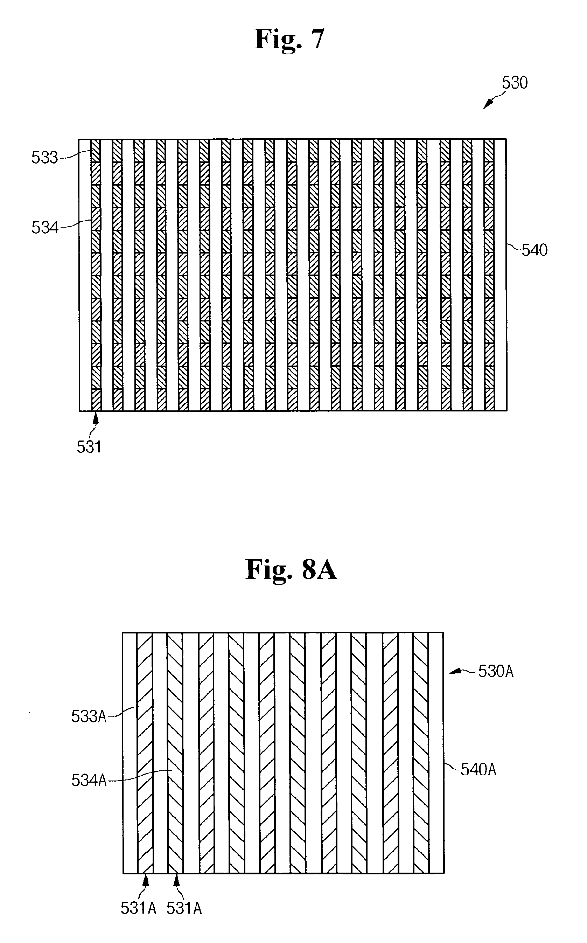

Fig. 7 is a cross-sectional view of a reaction plate in the reforming reactor shown in Fig. 6. Referring to Fig. 7, in the reforming reactor 530, a film-shaped carrier (not shown) made of alumina is formed on the inner surface of a reaction channel 531 pierced in the reaction plate 540, and the oxidation catalyst 533 and the reforming catalyst 534 formed by carrying catalyst materials in the carrier are alternately formed in a longitudinal direction of the reaction channel 531.

The structures and operations of the stack according to the present embodiment that are substantially the same as those described for the first embodiment will not be described again.

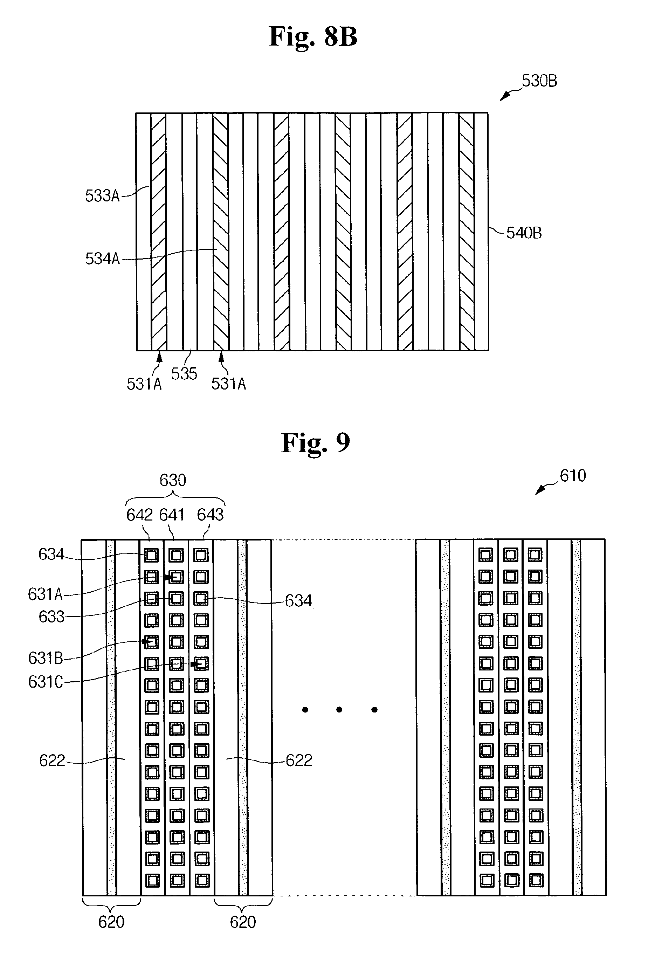

Figs. 8A and 8B are cross-sectional views schematically illustrating modified examples of the reforming reactor according to the second embodiment of the present invention.

Referring to Fig. 8A, in a first modified example of the reforming reactor 530A according to the present embodiment, a plurality of reaction channels 531A are pierced in the reaction plate 540A from one edge to the opposite edge. An oxidation catalyst 533A is formed on the inner surface of one reaction channel 531A, and a reforming catalyst 534A is formed on the inner surface of the neighboring reaction channel 531A. That is, the oxidation catalyst 533A and the reforming catalyst 534A are alternately formed in the reaction channels 531A.

The other structures and operations of the reforming reactor 530A according to the modified example of Fig. 8A that are substantially the same as those described for the first modified example of Fig. 5A will not be described again.

Referring to Fig. 8B, the second modified example of the reforming reactor 530B according to the present embodiment has substantially the same structure as the first modified example of Fig. 8A, except that a vaporization channel 535 is formed between the reaction channels 531A pierced in the reaction plate 540B.

That is, the vaporization channel 535 is formed between the reaction channel 531A in which the oxidation catalyst 533A is formed and the reaction channel 531A in which the reforming catalyst 534A is formed.

The other structures and operations of the reforming reactor 530B according to the present modified example of Fig. 8B that are substantially the same as those described for the second modified example of Fig. 5B will not be described again.

Fig. 9 is a cross-sectional view illustrating a structure of a stack for a fuel cell system according to a third embodiment of the present invention.

Referring to Fig. 9, the stack 610 for a fuel cell system according to the present embodiment has substantially the same structures as those of the second embodiment, except that a plurality of reaction plates 641, 642, and 643 are interposed between the separators 622 of the neighboring electricity generators 620, thereby forming a reforming reactor 630.

The reforming reactor 630 according to the present embodiment includes a first reaction plate 641 in which a plurality of first reaction channels 631A are pierced, a second reaction plate 642 which is closely disposed on one side surface of the first reaction plate 641 and in which a plurality of second reaction channels 631B are pierced, and a third reaction plate 643 which is closely disposed on the other side surface of the first reaction plate 641 and in which a plurality of third reaction channels 631C are pierced.

The oxidation catalyst 633 is formed on the inner surface of the first reaction channel 631A and the reforming catalyst 634 is formed on the inner surfaces of the second and third reaction channels 631B and 631C.

Operations of the stack 610 for a fuel cell system according to the present embodiment having the above-mentioned structure are described below.

First, the pure fuel and the air are supplied to the first reaction channels 631A of the first reaction plate 641. Then, the first reaction plate 641 generates the thermal energy of a predetermined temperature range through the oxidation reaction of the fuel and the air with the oxidation catalyst 633. The thermal energy is delivered to the second and third reaction plates 642 and 643 through the first reaction plate 641.

The fuel mixture is supplied to the second and third reaction channels 631B and 631C of the second and third reaction plates 642 and 643. Then, the fuel mixture absorbs the thermal energy and is vaporized. The second and third reaction plates 642 and 643 generate hydrogen gas through the steam reforming reaction of the vaporized fuel mixture with the reforming catalyst 134.

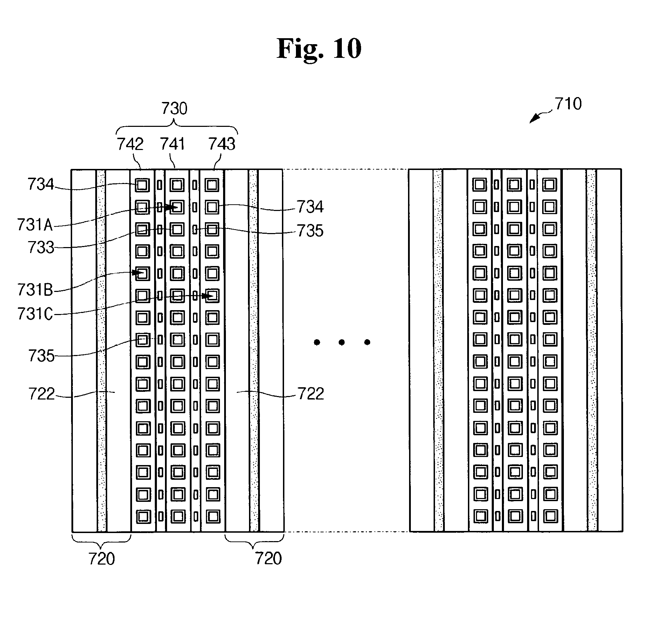

Fig. 10 is a cross-sectional view illustrating a structure of a stack of a fuel cell system according to a fourth embodiment of the present invention.

Referring to the Fig. 10, the stack 710 for a fuel cell system according to the present embodiment has substantially the same structure as the third embodiment, except that the vaporization channel 735 is formed between the second and third reaction channels 731B and 731C of the second and third reaction plates 742 and 743, thereby forming the reforming reactor 730. That is, in the reforming reactor 730 in which the oxidation catalyst 733 is formed in the first reaction channel 731a of the first reaction plate 741, and the reforming catalyst 734 is formed in the reaction channels 731B and 731C of the second and third reaction plates 742 and 743 closely disposed on both side surfaces of the first reaction plate 741, the vaporization channel 735 is additionally disposed between the second and third reaction channels 731B and 731C.

The vaporization channel 735 is supplied with the thermal energy generated through the oxidation reaction of the fuel and the air with the oxidation catalyst 733 to vaporize the fuel mixture, and supplies the vaporized fuel mixture to the second and third reaction channels 731B and 731C.

Therefore, according to the present embodiment, when the pure fuel and the air are supplied to the first reaction channel 731A, the first reaction plate 741 generates the thermal energy of a predetermined temperature range through the oxidation reaction of the fuel and the air with the oxidation catalyst 733.

The thermal energy is delivered to the vaporization channel 735 according to the present embodiment. Then, when the fuel mixture is supplied to the vaporization channel 735, the fuel mixture is vaporized with the thermal energy while passing through the vaporization channel 735.

The vaporized fuel mixture is supplied to the second and third reaction channels 731B and 731C. The second and third reaction plates 742 and 743 generate hydrogen gas through the steam reforming reaction of the fuel mixture with the reforming catalyst 734.

According to the present invention described above, since the reforming reactor generating hydrogen gas from the fuel and the electricity generators generating electric energy through a reaction of hydrogen and oxygen are integrally coupled in a body to form a stack, it is possible to minimize the volume of the entire fuel cell system.

According to the present invention, since the cooling of the electricity generators and the heating of the reforming reactor are simultaneously carried out by delivering the heat generated from the electricity generators to the reforming reactor, it is possible to maximize the thermal efficiency of the entire fuel cell system.

While the present invention has been described in connection with certain exemplary embodiments, it is to be understood by those skilled in the art that the invention is not limited to the disclosed embodiments, but, on the contrary, is intended to cover various modifications included within the scope of the appended claims.

## Claims

1. A stack (10, 510, 610, 710) for a fuel cell system comprising:
first and second electricity generators (20, 520, 620, 720) for generating electrical energy through a reaction between hydrogen and oxygen; and
a reformer (30, 30A, 130, 230, 330, 430, 530, 530A, 530B, 630, 730) disposed between the first and second electricity generators for generating hydrogen from a fuel and supplying the generated hydrogen to the electricity generators,
wherein the reformer comprises one or more reaction channels (31, 31A, 131, 231, 331, 431, 531, 631, 731), the one or more reaction channels including an oxidation catalyst (33, 33A, 233, 333, 433, 533, 633, 733) and a reforming catalyst (34, 34A, 234, 334, 434, 534, 634, 734) formed on inner surfaces of the channels.

2. A stack according to claim 1, wherein each of the electricity generators includes a membrane-electrode assembly (21) and first and second separators (22), the first and second separators having hydrogen and oxygen transfer channels (23, 24) respectively contacting first and second sides of the membrane-electrode assembly.

3. A stack according to claim 1 or 2, wherein the reformer is located on a surface of at least one of the first and second separators facing away from the hydrogen and oxygen transfer channels.

4. A stack according to claim 3, wherein the reformer (30, 30A) is formed in first and second reformer channels (31a) on surfaces of the first and second separators facing away from the hydrogen and oxygen transfer channels, and
wherein the first and second reformer channels combine to form the one or more reaction channels.

5. A stack according to claim 1 or 2, wherein the reformer comprises at least one reaction plate (530, 530A, 530B, 630, 730) disposed between adjacent electricity generators, the reaction plate having one or more reaction channels formed therein.

6. A stack according to claim 5, wherein the reformer (630, 730) comprises:
a first reaction plate (641, 741) having a plurality of first reaction channels (631A, 731A);
a second reaction plate (642, 742) having a plurality of second reaction channels (631B, 731B); and
a third reaction plate (643, 743) having a plurality of third reaction channels (631C, 731 C);
wherein the first reaction plate (641, 741) is disposed between the second (642, 742) and third (643, 743) reaction plates.

7. A stack according to claim 6, wherein the oxidation catalyst is formed on inner surfaces of the first reaction channel and the reforming catalyst is formed on inner surfaces of the second and third reaction channels.

8. A stack according to claim 6 or 7, wherein a vaporization channel (735) is formed between the reaction channels (741, 742, 743).

9. A stack according to any one of claims 4 to 6, wherein the oxidation catalyst and the reforming catalyst are alternately and continuously formed on an inner surface of the or each of the reaction channels.

10. A stack according to any one of claims 4 to 6, wherein the oxidation catalyst is formed on an inner surface of one of the reaction channels and the reforming catalyst is formed on an inner surface of an adjacent reaction channel.

11. A stack according to claim 10, including a vaporization channel (135, 535) between the reaction channels.

12. A stack according to claim 3, wherein the one or more reaction channels comprises an inlet and an outlet pierced into each of the first and second separators and a channel section connecting the inlet and the outlet.

13. A stack according to claim 12, wherein an oxidation catalyst is formed on an inner surface of the one or more reaction channels close to the inlet and a reforming catalyst is formed in the inner surface of the reaction channel close to the outlet.

14. A stack according to any one of the preceding claims, wherein the one or more reaction channels is formed in a serpentine shape.

15. A stack according to any one of claims 1 to 13, wherein the one or more reaction channels comprises a plurality of substantially parallel channels.

16. A stack according to any one of the preceding claims, wherein an operating temperature of the or each electricity generator ranges from approximately 100°C to approximately 250°C.

17. A fuel cell system comprising:
a stack (10, 510, 610, 710) according to any one of the preceding claims;
a fuel supply unit (50) for supplying the fuel to the fuel processing unit; and
an oxygen supply unit (70) for supplying oxygen to the or each electricity generator and the fuel processing unit.

## Patentansprüche

1. Ein Stapel (10, 510, 610, 710) für ein Brennstoffzellensystem, umfassend:
erste und zweite Elektrizitätsgeneratoren (20, 520, 620, 720) zum Generieren elektrischer Energie durch eine Reaktion zwischen Wasserstoff und Sauerstoff; und
einen zwischen den ersten und zweiten Elektrizitätsgeneratoren angeordneten Reformer (30, 30A, 130, 230, 330, 430, 530, 530A, 530B, 630, 730) zum Generieren von Wasserstoff aus einem Brennstoff und zum Liefern des generierten Wasserstoffs an die Elektrizitätsgeneratoren,
wobei der Reformer einen oder mehrere Reaktionskanäle (31, 31A, 131, 231, 331, 431, 531, 631, 731) umfasst, wobei der eine oder die mehreren Reaktionskanäle einen Oxidationskatalysator (33, 33A, 233, 333, 433, 533, 633, 733) und einen Reformierungskatalysator (34, 34A, 234, 334, 434, 534, 634, 734) beinhalten, die auf inneren Oberflächen der Kanäle ausgebildet sind.

2. Ein Stapel gemäß Anspruch 1, wobei jeder der Elektrizitätsgeneratoren eine Membran-Elektroden-Anordnung (21) sowie erste und zweite Separatoren (22) beinhaltet, wobei die ersten und zweiten Separatoren Wasserstoff- und Sauerstoff-Transferkanäle (23, 24) aufweisen, die mit ersten beziehungsweise zweiten Seiten der Membran-ElektrodenAnordnung in Kontakt stehen.

3. Ein Stapel gemäß Anspruch 1 oder 2, wobei der Reformer auf einer von den Wasserstoff- und Sauerstoff-Transferkanälen abgewandten Oberfläche mindestens eines der ersten und zweiten Separatoren angeordnet ist.

4. Ein Stapel gemäß Anspruch 3, wobei der Reformer (30, 30A) in ersten und zweiten Reformerkanälen (31a) auf von den Wasserstoff- und Sauerstoff-Transferkanälen abgewandten Oberflächen der ersten und zweiten Separatoren ausgebildet ist und
wobei die ersten und zweiten Reformerkanäle gemeinsam den einen oder die mehreren Reaktionskanäle bilden.

5. Ein Stapel gemäß Anspruch 1 oder 2, wobei der Reformer mindestens eine zwischen benachbarten Elektrizitätsgeneratoren angeordnete Reaktionsplatte (530, 530A, 530B, 630, 730) umfasst, wobei die Reaktionsplatte einen oder mehrere darin ausgebildete Reaktionskanäle aufweist.

6. Ein Stapel gemäß Anspruch 5, wobei der Reformer (630, 730) Folgendes umfasst:
eine erste Reaktionsplatte (641, 741), die eine Vielzahl von ersten Reaktionskanälen (631A, 731A) aufweist;
eine zweite Reaktionsplatte (642, 742), die eine Vielzahl von zweiten Reaktionskanälen (631B, 731B) aufweist; und
eine dritte Reaktionsplatte (643, 743), die eine Vielzahl von dritten Reaktionskanälen (631C, 731C) aufweist;
wobei die erste Reaktionsplatte (641, 741) zwischen den zweiten (642, 742) und dritten (643, 743) Reaktionsplatten angeordnet ist.

7. Ein Stapel gemäß Anspruch 6, wobei der Oxidationskatalysator auf inneren Oberflächen des ersten Reaktionskanals ausgebildet ist und der Reformierungskatalysator auf inneren Oberflächen der zweiten und dritten Reaktionskanäle ausgebildet ist.

8. Ein Stapel gemäß Anspruch 6 oder 7, wobei ein Verdampfungskanal (735) zwischen den Reaktionskanälen (741, 742, 743) ausgebildet ist.

9. Ein Stapel gemäß einem der Ansprüche 4 bis 6, wobei der Oxidationskatalysator und der Reformierungskatalysator abwechselnd und kontinuierlich auf einer inneren Oberfläche des oder jedes der Reaktionskanäle ausgebildet sind.

10. Ein Stapel gemäß einem der Ansprüche 4 bis 6, wobei der Oxidationskatalysator auf einer inneren Oberfläche eines der Reaktionskanäle ausgebildet ist und der Reformierungskatalysator auf einer inneren Oberfläche eines benachbarten Reaktionskanals ausgebildet ist.

11. Ein Stapel gemäß Anspruch 10, der einen Verdampfungskanal (135, 535) zwischen den Reaktionskanälen beinhaltet.

12. Ein Stapel gemäß Anspruch 3, wobei der eine oder die mehreren Reaktionskanäle einen Einlass und einen Auslass, die in jeden der ersten und zweiten Separatoren hinein gestochen sind, sowie einen den Einlass und den Auslass verbindenden Kanalabschnitt umfasst.

13. Ein Stapel gemäß Anspruch 12, wobei ein Oxidationskatalysator auf einer inneren Oberfläche des einen oder der mehreren Reaktionskanäle in der Nähe des Einlasses ausgebildet ist und ein Reformierungskatalysator in der inneren Oberfläche des Reaktionskanals in der Nähe des Auslasses ausgebildet ist.

14. Ein Stapel gemäß einem der vorhergehenden Ansprüche, wobei der eine oder die mehreren Reaktionskanäle in einer Serpentinenform ausgebildet ist.

15. Ein Stapel gemäß einem der Ansprüche 1 bis 13, wobei der eine oder die mehreren Reaktionskanäle eine Vielzahl von im Wesentlichen parallelen Kanälen umfasst.

16. Ein Stapel gemäß einem der vorhergehenden Ansprüche, wobei eine Betriebstemperatur des oder jedes Elektrizitätsgenerators zwischen ungefähr 100°C und ungefähr 250°C liegt.

17. Ein Brennstoffzellensystem, umfassend:
einen Stapel (10, 510, 610, 710) gemäß einem der vorhergehenden Ansprüche;
eine Brennstoffliefereinheit (50) zum Liefern des Brennstoffs an die Brennstoffverarbeitungseinheit; und
eine Sauerstoffliefereinheit (70) zum Liefern von Sauerstoff an den oder jeden Elektrizitätsgenerator und die Brennstoffverarbeitungseinheit.

## Revendications

1. Empilement (10, 510, 610, 710) pour un système de pile à combustible comprenant :
des premier et second générateurs (20, 520, 620, 720) d'électricité destinés à générer de l'énergie électrique au moyen d'une réaction entre de l'hydrogène et de l'oxygène ; et
un reformeur (30, 30A, 130, 230, 330, 430, 530, 530A, 530B, 630, 730) disposé entre les premier et second générateurs d'électricité pour reformer de l'hydrogène à partir d'un combustible et pour délivrer l'hydrogène reformé aux générateurs d'électricité,
dans lequel le reformeur comprend un ou plusieurs canaux (31, 31A, 131, 231, 331, 431, 531, 631, 731) de réaction, les un ou plusieurs canaux de réaction incluant un catalyseur (33, 33A, 233, 333, 433, 533, 633, 733) d'oxydation et un catalyseur (34, 34A, 234, 334, 434, 534, 634, 734) de reformage formés sur des surfaces intérieures des canaux.

2. Empilement selon la revendication 1, dans lequel chacun des générateurs d'électricité inclut un assemblage (21) de membrane-électrode et des premier et second séparateurs (22), les premier et second séparateurs ayant des canaux (23, 24) de transfert d'hydrogène et d'oxygène entrant en contact respectivement avec des premier et second côtés de l'assemblage de membrane-électrode.

3. Empilement selon la revendication 1 ou 2, dans lequel le reformeur est situé sur une surface d'au moins l'un des premier et second séparateurs tournée vers l'extérieur des canaux de transfert d'hydrogène et d'oxygène.

4. Empilement selon la revendication 3, dans lequel le reformeur (30, 30A) est formé dans des premier et second canaux (31a) de reformeur sur des surfaces des premier et second séparateurs tournées vers l'extérieur des canaux de transfert d'hydrogène et d'oxygène, et
dans lequel les premier et second canaux de reformeur se combinent pour former les un ou plusieurs canaux de réaction.

5. Empilement selon la revendication 1 ou 2, dans lequel le reformeur comprend au moins une plaque (530, 530A, 530B, 630, 730) de réaction disposée entre des générateurs d'électricité adjacents, un ou plusieurs canaux de réaction étant formés dans la plaque de réaction.

6. Empilement selon la revendication 5, dans lequel le reformeur (630, 730) comprend :
une première plaque (641, 741) de réaction ayant une pluralité de premiers canaux (631A, 731A) de réaction ;
une deuxième plaque (642, 742) de réaction ayant une pluralité de deuxièmes canaux (631B, 731B) de réaction ;
une troisième plaque (643, 743) de réaction ayant une pluralité de troisièmes canaux (631C, 731C) de réaction ;
dans lequel la première plaque (641, 741) de réaction est disposée entre les deuxième (642, 742) et troisième (643, 743) plaques de réaction.

7. Empilement selon la revendication 6, dans lequel le catalyseur d'oxydation est formé sur des surfaces intérieures du premier canal de réaction et le catalyseur de reformage est formé sur des surfaces intérieures des deuxième et troisième canaux de réaction.

8. Empilement selon la revendication 6 ou 7, dans lequel un canal (735) d'évaporation est formé entre les canaux (741, 742, 743) de réaction.

9. Empilement selon l'une quelconque des revendications 4 à 6, dans lequel le catalyseur d'oxydation et le catalyseur de reformage sont formés de manière alternée et continue sur une surface intérieure du canal de réaction ou de chacun des canaux de réaction.

10. Empilement selon l'une quelconque des revendications 4 à 6, dans lequel le catalyseur d'oxydation est formé sur une surface intérieure de l'un des canaux de réaction et le catalyseur de reformage est formé sur une surface intérieure d'un canal de réaction adjacent.

11. Empilement selon la revendication de 10, incluant un canal (135, 535) d'évaporation entre les canaux de réaction.

12. Empilement selon la revendication 3, dans lequel les un ou plusieurs canaux de réaction comprennent un orifice d'entrée et un orifice de sortie percés dans chacun des premier et second séparateurs et une section de canal reliant l'orifice d'entrée et l'orifice de sortie.

13. Empilement selon la revendication de 12, dans lequel un catalyseur d'oxydation est formé sur une surface intérieure des un ou plusieurs canaux de réaction près de l'orifice d'entrée et un catalyseur de reformage est formé dans la surface intérieure du canal de réaction près de l'orifice de sortie.

14. Empilement selon l'une quelconque des revendications précédentes, dans lequel les un ou plusieurs canaux de réaction sont conformés en une forme de serpentin.

15. Empilement selon l'une quelconque des revendications 1 à 13, dans lequel les un ou plusieurs canaux de réaction comprennent une pluralité de canaux sensiblement parallèles.

16. Empilement selon l'une quelconque des revendications précédentes, dans lequel la température de fonctionnement du générateur ou de chacun des générateurs d'électricité est comprise dans la plage d'environ 100 °C à environ 250 °C.

17. Système de pile à combustible comprenant :
un empilement (10, 510, 610, 710) selon l'une quelconque des revendications précédentes ;
une unité (50) d'alimentation en combustible destinée à délivrer le combustible à l'unité de traitement de combustible ; et
une unité (70) d'alimentation en oxygène destinée à délivrer de l'oxygène au générateur ou à chacun des générateurs d'électricité et à l'unité de traitement de combustible.
